**Europäisches Patentamt**

**European Patent Office**

**Office européen des brevets**

(19)

(11) Veröffentlichungsnummer: **0 005 695**
A1

(12) # EUROPÄISCHE PATENTANMELDUNG

(21) Anmeldenummer: **78100003.9**

(22) Anmeldetag: **01.06.78**

(51) Int. Cl.²: **B 60 R 1/08**

(43) Veröffentlichungstag der Anmeldung:
**12.12.79** Patentblatt **79/25**

(84) Benannte Vertragsstaaten:
**BE CH DE FR GB LU NL SE**

(71) Anmelder: **Kälberer, Hans-Gerhard**
**Hasenwinkel 13**
**D-3320 Salzgitter 1(DE)**

(72) Erfinder: **Kälberer, Hans-Gerhard**
**Hasenwinkel 13**
**D-3320 Salzgitter 1(DE)**

(74) Vertreter: **Gralfs, Harro, Dipl.-Ing.**
**Am Bürgerpark 8**
**D-3300 Braunschweig(DE)**

(54) Aussenspiegel ohne toten Winkel für alle Kraftfahrzeuge.

(57) Außenspiegel ohne toten Winkel für alle Kraftfahrzeuge. Der Außenspiegel enthält eine Spiegelfläche (2), die zur Beobachtung über einen breiten Sektor konvex gekrümmt ist, beispielsweise als Kugelflächenabschnitt ausgebildet ist. Auf der eben ausgebildeten Rückseite des Spiegelgehäuses kann eine Parkuhr (10) angeordnet sein.

Fig.2

Fig.3

EP 0 005 695 A1

Croydon Printing Company Ltd.

Hans-Gerhard Kälberer
Hasenwinkel 13
D-3320 Salzgitter 1
Bundesrepublik Deutschland

Außenspiegel ohne toten Winkel für alle Kraftfahrzeuge

Die Erfindung bezieht sich auf alle Personen- und Lastkraftwagen, Motorräder, Straßenbahn, Klein- und Großbusse, Schiffe und ähnliche Fahrzeuge.

Der Außenspiegel wurde durch seine völlig neue Entwicklung so entwickelt, daß er bei Einsichtnahme im linken oder im rechten Außenspiegel absolut keinen toten Winkel, weder nach links, rechts, oben oder unten mehr hat, da das Spiegeleinsichtsfeld nach allen Seiten halbrund in gegensätzlicher Fahrtrichtung gefertigt wurde.

Die Erfindung kann sowohl in halbrundem Spiegelglas, als auch in abgeflachter, ovaler, aber nach gegensätzlicher Fahrtrichtung gewölbt eingebaut werden.

Weiterhin braucht man bei verschiedenen Kfz-Typen auch nur dieses eckig abgerundete Spiegelglas (laut meiner Erfindung) in die bestehende Außenspiegelhalterung einzubauen.

**0005695**

Die Halterung des Außenspiegels erfolgt in herkömmlicher Art. Der gesamte Außenspiegel, der in Form
von einer Chromhalterung mit getöntem, halbrunden
Spiegelglas oder alternativ völlig in Chrom hergestellt werden kann, ist durch seine absolute neue
Entwicklung ein hundertprozentiger Sicherheitsfaktor
im Straßenverkehr, wobei bei Patentanmeldung sicherlich
von gesetzeswegen dieser Außenspiegel montiert werden
muß.

Weiterhin wurde auf den geraden, abgeflachten, runden
rückseitigen Hohlkörper des Außenspiegels eine von
Hand einzustellende Parkuhr, die jederzeit sichtbar und
unkompliziert einzustellen ist, zusätzlich eingebaut.


In der Zeichnung ist dargestellt:


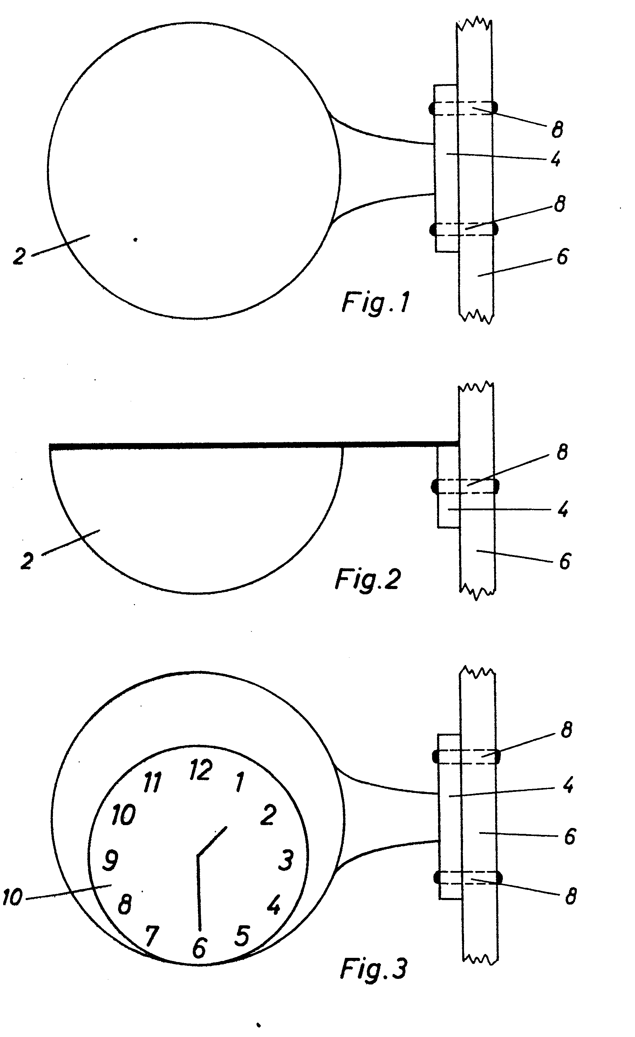

Fig. 1    Vorderseite
Fig. 2    Draufsicht
Fig. 3    Rückseite


Benennung der Teile:

2          Einsichtsfeld
4          Halterung
6          Türholm
8          Schraube
10         Parkuhr

Patentanspruch:

Als Patentanspruch melde ich nur an den Außenspiegel
ohne absoluten toten Winkel mit rückseitiger,von
Hand einzustellender Parkuhr.

0005695

*Fig.1*

*Fig.2*

*Fig.3*

Europäisches
Patentamt

**EUROPÄISCHER RECHERCHENBERICHT**

0005695

Nummer der Anmeldung

EP 78 10 0003

| Kategorie | Kennzeichnung des Dokuments mit Angabe, soweit erforderlich, der maßgeblichen Teile | betrifft Anspruch |
|---|---|---|
| X | FR - A - 1 247 148 (RIBETTE)<br>* Ganz * | 1 |
| | --- | |
| X | BE - A - 845 604 (ZDOBINSKY)<br>* Ansprüche 1,2,4 * | 1 |
| | --- | |
| X | DE - A - 2 508 517 (ZDOBINSKY)<br>* Anspruch 1 * | 1 |
| | --- | |
| X | FR - A - 2 369 123 (BACKENKOHLER)<br>* Ansprüche 1-4; Figur 1 * | 1 |
| | --- | |
| | FR - A - 1 479 317 (JEUNET)<br>* Ganz * | 1 |
| | --- | |
| X | US - A - 3 016 641 (LEPINAY)<br>* Anspruch 1 * | 1 |
| | --- | |
| | CH - A - 137 073 (SANDOZ-VUILLE)<br>* Ansprüche * | 1 |
| | ---- | |

**EINSCHLÄGIGE DOKUMENTE**

**KLASSIFIKATION DER ANMELDUNG (Int.Cl.³)**

B 60 R 1/08

**RECHERCHIERTE SACHGEBIETE (Int. Cl.³)**

B 60 R 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-02-1979 | SCHMITTER |

EPA form 1503.1  06.78